# EUROPÄISCHE PATENTSCHRIFT

(11) **EP 2 927 105 B1**
(45) Veröffentlichungstag und Bekanntmachung des Hinweises auf die Patenterteilung: **02.08.2017**
(21) Anmeldenummer: 14163588.8
(22) Anmeldetag: 04.04.2014
(51) Int. Cl.: B62D 63/02, B62D 65/02, B62D 65/04, B23P 21/00

(54) **Vorrichtung und Verfahren zur Montage oder Demontage eines modularen Fahrzeugs.**
Device and method for installing or dismantling a modular vehicle.
Dispositif et procédé de montage ou de démontage d'un véhicule modulaire.

(43) Veröffentlichungstag der Anmeldung: 07.10.2015
(73) Patentinhaber: IBG Technology Hansestadt Lübeck GmbH, 23569 Lübeck (DE)
(72) Erfinder: Goeke, Matthias, 58809 Neuenrade (DE)
(74) Vertreter: Ramrath, Lukas

(56) Entgegenhaltungen:
- WO-A1-2009/024883
- DE-A1- 10 154 353
- DE-A1- 19 833 395
- DE-A1-102010 010 814
- US-A1- 2006 179 629
- US-A1- 2012 139 292
- US-B2- 7 331 094

## Beschreibung

Die Erfindung betrifft eine Vorrichtung und ein Verfahren zum Montage oder Demontage eines Fahrzeugs aus Fahrzeugmodulen.

Eine Fahrzeugmontage, insbesondere Endmontage, wird in der Regel im Rahmen einer Fließbandfertigung durchgeführt. Hierbei werden einzelne Montageschritte im Fließbetrieb zeitlich und auch räumlich hintereinander durchgeführt. Ein (teilmontiertes) Fahrzeug wird hierbei für jeden Montageschritt durch eine Fördereinrichtung einer folgenden Montageeinrichtung zugeführt. Hierbei sind sowohl die einzelnen Montageeinrichtungen als auch eine entsprechende Fördereinrichtung, z.B. ein Fließband, individuell auf einzelne Fahrzeugtypen abgestimmt. Zusätzlich wird das Fahrzeug von außen nach innen montiert. Dies bedeutet, dass z.B. nach einer Bodengruppe eine Karosserie mit der gesamten fahrzeugtragenden Struktur montiert wird. Erst nach Montage der Karosserie erfolgt eine Montage von innenliegenden Elementen, z.B. Sitzen, einer Armaturentafel, Innenverkleidungselementen, eines Lenkrads, einer Pedalerie etc. Hierdurch ergibt sich nachteilig, dass diese Elemente durch Öffnungen der Karosserie in das Fahrzeug eingebracht und montiert werden müssen, was einen Montageprozess erschwert. Weiter ergibt sich, dass ökonomisch ungünstige Montageprozesse durchzuführen sind, die in der Regel nur mit hohem Aufwand automatisierbar sind.

Weiterhin sind derartige Montageverfahren aufgrund der Spezialisierung auf ein bestimmtes Fahrzeugmodell, insbesondere der Anlagen/Produktionsstraßen, kaum flexibel hinsichtlich einer Montage anderer Fahrzeugmodelle oder -varianten. Dies betrifft sowohl die einzelnen Montageeinrichtungen als auch die entsprechende Fördertechnik. Weiter erzeugen derart komplexe Prozessstrukturen hohe Investitionskosten, die nur über eine entsprechend hohe Produktstückzahl wirtschaftlich umgelegt werden können. Im Fließbetrieb einer Großserienfertigung können kleine Stückzahlen von Fahrzeugen nicht kostengünstig gefertigt werden. Die dargestellte Fahrzeugproduktion findet je nach Fahrzeugtyp zentral an wenigen Standorten weltweit statt. Hiernach müssen die dort gefertigten Fahrzeuge mit großem logistischem Aufwand verteilt werden.

Bekannt ist auch eine Kleinstserien-Garagenfertigung (Werkstattfertigung). Hierbei werden einzelne Montageschritte überwiegend manuell durchgeführt.

Die US 7,331,094 B2 offenbart eine Vorrichtung zum Positionieren von Komponenten, die miteinander verbunden werden, z.B. Karosserieteile. Die Vorrichtung umfasst zumindest ein bewegliches Zentralmodul und mehrere Arme, die im Raum beweglich und mit dem Zentralmodul verbunden sind. Jeder der Arme weist ein Halteelement zum Halten der Komponenten auf. Die Komponenten werden in einer Position in einer gewünschten Anordnung der Komponenten gehalten.

Die US2006/0179629 A1 offenbart eine Montage von Teilen an einem Fahrzeug, welches auf einer Dreh-Montagebett gelagert ist.

Es stellt sich daher das technische Problem, eine Vorrichtung und ein Verfahren zur Montage oder Demontage eines Fahrzeugs aus Fahrzeugmodulen zu schaffen, welche eine einfache, zeitlich schnelle, bauraumoptimierte und hinsichtlich eines Fahrzeugmodells oder -typs flexible Montage oder Demontage ermöglichen.

Die Lösung des technischen Problems ergibt sich durch die Gegenstände mit den Merkmalen der Ansprüche 1 und 5. Weitere vorteilhafte Ausgestaltungen der Erfindung ergeben sich aus den Unteransprüchen.

Vorgeschlagen wird eine Vorrichtung zur Montage oder Demontage eines Fahrzeugs aus Fahrzeugmodulen. Der Begriff Fahrzeugmodul wird nachfolgend noch näher erläutert. Das Fahrzeug kann insbesondere ein Elektrofahrzeug sein. Weiter insbesondere kann das Fahrzeug ein Elektrofahrzeug mit mindestens einem Radnabenmotor sein. Selbstverständlich ist jedoch auch die (De)montage anderer Fahrzeugarten, z.B. von Motorrädern, Trikes, Quads etc. vorstellbar. Die vorgeschlagene Vorrichtung kann auch als Montagezelle bezeichnet werden.

Die Vorrichtung umfasst eine erste Positioniereinrichtung und mindestens eine weitere Positioniereinrichtung. Selbstverständlich kann die Vorrichtung mehr als zwei, beispielsweise drei, vier oder fünf oder mehr als fünf Positioniereinrichtungen umfassen. Es ist aber auch vorstellbar, dass die vorgeschlagene Vorrichtung genau zwei Positioniereinrichtungen umfasst.

Weiter ist eine Position eines Grundmoduls oder einer Modulgesamtheit durch eine Hauptpositioniereinrichtung veränderbar, insbesondere zur Montage oder Demontage eines weiteren Fahrzeugmoduls an/von dem Grundmodul oder der Modulgesamtheit. Die Hauptpositioniereinrichtung bezeichnet hierbei eine der mindestens zwei Positioniereinrichtungen, beispielsweise die erste Positioniereinrichtung. Selbstverständlich ist es vorstellbar, dass die Hauptpositioniereinrichtung auch durch mehrere, beispielsweise zwei, Positioniereinrichtungen der Gruppe von Positioniereinrichtungen ausgebildet wird.

Es ist möglich, jedoch nicht zwingend, dass in verschiedenen Montageschritten oder Teilschritten jeweils verschiedene Positioniereinrichtungen die Hauptpositioniereinrichtung ausbilden. Allerdings kann auch in jedem Montageschritt die Hauptpositioniereinrichtung von derselben, beispielsweise der ersten, Positioniereinrichtung ausgebildet werden.

Ein Grundmodul bezeichnet hierbei ein Grundmodul des modularen Fahrzeugs, wobei im Montageverfahren weitere Fahrzeugmodule an das Grundmodul oder eine das Grundmodul umfassende Modulgesamtheit montiert werden. Das Grundmodul bildet somit das Ausgangsmodul im Montageverfahren. Das Grundmodul bildet jedoch auch ein Fahrzeugmodul. Die Modulgesamtheit umfasst also das Grundmodul. Die Modulgesamtheit kann beispielsweise das Fahrzeug im teilmontierten Zustand ausbilden.

Nachfolgend kann auf folgendes, insbesondere ortsfestes, Referenzkoordinatensystem der Vorrichtung Bezug genommen werden. Das Referenzkoordinatensystem kann beispielsweise als Koordinatensystem mit drei, insbesondere zueinander orthogonalen, Achsen ausgebildet sein. Eine Veränderung der Position bezeichnet hierbei eine Veränderung der Position entlang mindestens einer dieser drei Achsen. Die Position kann auch als Lage bezeichnet werden. Eine Veränderung einer Orientierung oder Ausrichtung kann eine Verdrehung um mindestens eine dieser drei Achsen bedeuten. Eine Veränderung der Orientierung kann beispielsweise entsprechend der sogenannten yawpitch-roll-Konvention beschrieben werden.

Die Hauptpositioniereinrichtung kann derart ausgebildet sein, dass durch die Hauptpositioniereinrichtung das Grundmodul oder die Modulgesamtheit betätigbar oder greifbar ist. Greifbar kann bedeuten, dass eine mechanische Verbindung, insbesondere eine kraft- und/oder formschlüssige mechanische Verbindung der Hauptpositioniereinrichtung und des Grundmoduls oder der Modulgesamtheit hergestellt wird. Somit kann die Hauptpositioniereinrichtung das Grundmodul oder die Modulgesamtheit betätigen und/oder haltern, wobei eine Gewichtskraft und/oder Trägheit des Grundmoduls oder der Modulgesamtheit, insbesondere vollständig, durch die Hauptpositioniereinrichtung kompensiert werden kann. Somit kann eine Positioniereinrichtung auch als Betätigungseinrichtung bezeichnet werden.

Weiter ist eine Position und/oder Orientierung eines weiteren Fahrzeugmoduls durch eine Modulpositioniereinrichtung veränderbar, insbesondere zur Montage oder Demontage des weiteren Fahrzeugmoduls an/von dem Grundmodul oder der Modulgesamtheit. Die Modulpositioniereinrichtung bezeichnet eine der verbleibenden Positioniereinrichtungen, beispielsweise die weitere Positioniereinrichtung. Selbstverständlich ist es vorstellbar, dass die Modulpositioniereinrichtung auch durch mehrere, beispielsweise zwei, verbleibende Positioniereinrichtungen der Gruppe von Positioniereinrichtungen ausgebildet wird.

Es ist möglich, jedoch nicht zwingend, dass in verschiedenen Montageschritten jeweils dieselbe Positioniereinrichtung die Haupt- und die Modulpositioniereinrichtung ausbildet. Allerdings kann auch in einem ersten Montageschritt oder Teilschritt eine Positioniereinrichtung die Hauptpositioniereinrichtung ausbilden, wobei diese Positioniereinrichtung in einem weiteren Montageschritt oder Teilschritt die Modulpositioniereinrichtung ausbildet. In diesem Fall wird die Hauptpositioniereinrichtung von einer weiteren Positioniereinrichtung ausgebildet.

Hierbei kann die mindestens eine Modulpositioniereinrichtung derart ausgebildet sein, dass mindestens ein Fahrzeugmodul durch die Modulpositioniereinrichtung betätigbar oder greifbar ist. Somit kann ein Fahrzeugmodul durch die Modulpositioniereinrichtung betätigt oder gehaltert werden.

Insbesondere kann die Hauptpositioniereinrichtung eine höhere Traglast als die mindestens eine Modulpositioniereinrichtung aufweisen, beispielsweise eine Traglast, die höher als eine Gewichtskraft eines fertig montierten Fahrzeugs ist. Die mindestens eine Modulpositioniereinrichtung kann eine Traglast aufweisen, die höher als eine Gewichtskraft des schwersten Fahrzeugmoduls, jedoch geringer als eine Gewichtskraft des fertig montierten Fahrzeugs ist. Insbesondere in diesem Fall kann die Hauptpositioniereinrichtung in jedem Montageschritt von derselben Positioniereinrichtung aus der Menge der Positioniereinrichtungen ausgebildet werden, beispielsweise von der ersten Positioniereinrichtung.

Allerdings können auch alle Positioniereinrichtungen eine Traglast aufweisen, die höher als die Gewichtskraft des fertig montierten Fahrzeugs ist.

Weiter ist auch eine Orientierung des Grundmoduls oder der Modulgesamtheit durch die Hauptpositioniereinrichtung veränderbar. Dies bedeutet, dass die Hauptpositioniereinrichtung zusätzlich zur Positionierung, als einer Translationsbewegung, auch eine Verdrehung oder Verschwenkung, also eine Rotationsbewegung, des Grundmoduls oder der Modulgesamtheit bewirken kann.

Insbesondere kann durch die Hauptpositioniereinrichtung eine Einstellung der Position und Orientierung mit insgesamt sechs Freiheitsgraden des Grundmoduls oder der Modulgesamtheit erfolgen. Die Einstellung einer Position und/oder Orientierung kann auch als Positionierung bezeichnet werden. Entsprechend kann die Einstellung der Position und Orientierung des Fahrzeugmoduls durch die Modulpositioniereinrichtung erfolgen.

Die Vorrichtung kann hierbei insbesondere derart ausgebildet sein, dass eine vollständige Montage des Fahrzeugs aus dem Grundmodul und den weiteren Fahrzeugmodulen mittels der Vorrichtung durchgeführt werden kann. Nach einer vollständigen Montage kann sich das Fahrzeug in einem fahrfertigen oder fahrbetriebsbereiten Zustand befinden. Entsprechend kann die Vorrichtung auch derart ausgebildet sein, dass mittels der Vorrichtung eine vollständige Demontage eines Fahrzeugs in das Grundmodul und weitere Fahrzeugmodule durchführbar ist.

Die Positioniereinrichtungen, insbesondere nicht bewegliche Teile der Positioniereinrichtungen, können hierbei, insbesondere bezüglich des vorhergehend erläuterten Referenzkoordinatensystems, ortsfest angeordnet sein. Die Positioniereinrichtungen können sich überschneidende Arbeitsräume aufweisen.

Insbesondere kann mittels der Hauptpositioniereinrichtung das Grundmodul oder die Modulgesamtheit in eine vorbestimmte Anzahl von Montagepositionn und/oder eine vorbestimmte Anzahl von Montageorientierungen positioniert werden.

Die Vorrichtung kann hierbei insbesondere derart ausgebildet sein, dass eines der nachfolgend noch näher erläuterten Verfahren zur Montage oder Demontage mittels der Vorrichtung durchführbar ist.

Die Positioniereinrichtungen können ein oder verschiedene Greifmodule zur Betätigung oder Handhabung des Grundmoduls, der Modulgesamtheit oder des Fahrzeugmoduls aufweisen. Insbesondere kann ein Greifmodul der Positioniereinrichtung auswechselbar sein. Hierzu kann die Vorrichtung mindestens ein Greifermagazin für verschiedene Greifmodule umfassen. Dieses Greifermagazin bzw. verschiedene Greifermagazine können in dem Arbeitsraum der ersten oder der mindestens einen weiteren Positioniereinrichtung oder in einem überschneidenden Teil der Arbeitsräume angeordnet sein.

Hierdurch ergibt sich in vorteilhafter Weise eine Vorrichtung zur Montage oder Demontage eines modularen Fahrzeugs, welche eine, insbesondere vollständige, Montage oder Demontage mit geringem Arbeitsraumbedarf durchführen kann, wobei die Vorrichtung selbst ebenfalls nur einen geringen Bauraumbedarf, insbesondere im Vergleich zur Fließfertigung, aufweist. Weiter kann/können mittels der vorgeschlagenen Vorrichtung in vorteilhafter Weise nicht ausschließlich ein Fahrzeugmodell oder -typ bzw. eine Fahrzeugart, sondern verschiedene Fahrzeugtypen, Fahrzeugarten oder Derivate montiert oder demontiert werden. Mittels der vorgeschlagenen Vorrichtung können z.B. unmittelbar nacheinander unterschiedlichste Fahrzeugmodelle oder -typen montiert werden. Auch können ohne großen Aufwand variable Stückzahlen mittels der vorgeschlagenen Vorrichtung produziert werden. Somit besteht in vorteilhafter Weise eine Flexibilität der Vorrichtung hinsichtlich Stückzahl sowie Fahrzeugtypen oder gar andere Produktgruppen.

In weiter vorteilhafter Weise ermöglicht die vorgeschlagene Vorrichtung eine dezentrale Produktion von Fahrzeugen. Je nach (regionaler) Nachfrage können derartige Vorrichtungen weltweit dezentral errichtet werden und Fahrzeuge unmittelbar in Endkundennähe (end)montieren.

In weiter vorteilhafter Weise ist keine aufwendige Fördertechnik zwischen einzelnen Montageeinrichtungen in einem Fertigungsprozess, insbesondere kein Fließband zum Transport zwischen verschiedenen Montageeinrichtungen, die jeweils einen Montageschritt durchführen, zur Montage notwendig.

Erfindungsgemäß sind die erste und die mindestens eine weitere Positioniereinrichtung als Gelenkarmroboter ausgebildet.

Hierdurch ergibt sich in vorteilhafter Weise, dass in einem großen Arbeitsraum sowohl Position als auch Orientierung des Grundmoduls, der Modulgesamtheit bzw. des Fahrzeugmoduls verändert werden können.

In einer weiter bevorzugten Ausführungsform ist eine maximale Dimension eines Arbeitsraums der Vorrichtung zur Montage oder Demontage kleiner als oder gleich 25m. Eine Dimension kann hierbei eine Länge, eine Breite oder eine Höhe, aber auch ein maximaler Durchmesser, sein. Bevorzugt ist eine maximale Dimension des Arbeitsraums kleiner als oder gleich 20m, weiter vorzugsweise kleiner als oder gleich 15m, weiter vorzugsweise kleiner als oder gleich 10m, weiter vorzugsweise kleiner als oder gleich 5m.

Beispielsweise kann eine Länge des Arbeitsraums kleiner als oder gleich 25m, 20m, 15m, 10m oder 5m sein. Eine Breite des Arbeitsraums kann kleiner als oder gleich 25m, 20m, 15m, 10m oder 5m sein. Eine Höhe des Arbeitsraums kann kleiner als oder gleich 8m sein.

Somit ist es möglich, dass ein Volumen des Arbeitsraums der Vorrichtung zur Montage oder Demontage, insbesondere zur vollständigen Montage oder Demontage, ein vorbestimmtes Volumen, beispielsweise ein Volumen von 2000 m³ nicht überschreitet.

Der Arbeitsraum kann hierbei einen Raum bezeichnen, in welchem sich das Grundmodul, die Modulgesamtheit und/oder ein weiteres Fahrzeugmodul während des gesamten (De-) Montageverfahrens, insbesondere vollständig, befinden. Auch kann der Arbeitsraum einen Raum bezeichnen, in welchem das Grundmodul, die Modulgesamtheit und/oder ein weiteres Fahrzeugmodul durch die Positioniereinrichtungen positioniert werden können. Dies bedeutet, dass, insbesondere eine vollständige, Montage oder Demontage ausschließlich innerhalb des Arbeitsraums erfolgen kann. Der Arbeitsraum kann hierbei quaderförmig sein, kugelförmig sein oder eine andere geometrische Form aufweisen.

Das Volumen des Arbeitsraums kann hierbei insbesondere gleich der Summe der Arbeitsraumvolumina der Positioniereinrichtungen sein. Vorzugsweise ist das Volumen des Arbeitsraums kleiner als die Summe der Arbeitsraumvolumina der Positioniereinrichtungen.

In einer weiteren Ausführungsform umfasst die Vorrichtung eine Transporteinrichtung, wobei mittels der Transporteinrichtung ein Fahrzeugmodul oder mehrere, vereinzelte Fahrzeugmodule in den Arbeitsraum und/oder aus dem Arbeitsraum der Vorrichtung transportierbar sind. Die Transporteinrichtung bildet hierbei keine Positioniereinrichtung zur Positionierung eines Fahrzeugmoduls zur Montage und Demontage. Insbesondere dient die Transporteinrichtung nicht dem Transport, insbesondere nicht dem dauerhaften Transport, eines teilmonierten Fahrzeugs, sondern dem Transport von Fahrzeugmodulen und ist entsprechend ausgebildet. Beispielsweise kann eine maximale Traglast der Transporteinrichtung kleiner als ein Gewicht eines endmontierten Fahrzeugs sein. Allerdings kann die Transporteinrichtung einen Abtransport von nachfolgend näher erläuterten Halteeinrichtungen, insbesondere einer unbestückten Halteeinrichtungen, für Fahrzeugmodule ermöglichen. Die Transporteinrichtung kann bei der Demontage zur Bereitstellung von unbestückten Halteeinrichtungen dienen, die dann nachfolgend mit demontierten Fahrzeugmodulen bestückt werden. Die Transporteinrichtung kann bei der Demontage oder Montage auch unbestückte oder zumindest teilweise bestückte Halteeinrichtungen zwischenlagern. Dies wird nachfolgend näher erläutert.

Die Transporteinrichtung kann insbesondere als Förderband ausgebildet sein. In diesem Fall kann das Förderband Fahrzeugmodule in und/oder aus dem Arbeitsraum ausschließlich der vorgeschlagenen Vorrichtung transportieren. Insbesondere dient die Transporteinrichtung aber nicht der Verbindung von Arbeitsräumen verschiedener Montagevorrichtungen. Das Förderband kann in dem Arbeitsraum der Vorrichtung oder um ein vorbestimmtes, insbesondere geringes, Maß außerhalb des Arbeitsraums enden. Insbesondere bildet das Förderband kein Fließband zur Fließbandfertigung aus.

Es ist vorstellbar, dass mehrere Halteeinrichtungen gleichzeitig in den Arbeitsraum transportiert werden oder sich gleichzeitig im Arbeitsraum befinden. Weiter ist vorstellbar, dass mittels der Transporteinrichtung eine Halteeinrichtung in eine oder mehrere Entnahmeposition(en) transportierbar ist, wobei nur in der/den Entnahmeposition(en) eine Entnahme von oder eine Bestückung mit einem Fahrzeugmodul möglich ist.

Auch ist vorstellbar, dass eine unbestückte oder mit mindestens einem Fahrzeugmodul bestückte Halteeinrichtung durch die Transporteinrichtung in eine oder mehrere Zwischenlagerposition(en), die sich in dem Arbeitsraum aber auch außerhalb des Arbeitsraums befinden kann/können, transportierbar ist. In der/den Zwischenlagerposition(en) kann eine Entnahme von oder Bestückung mit Fahrzeugmodulen nicht möglich sein. Zeitlich parallel zum Transport in eine Zwischenlagerposition kann beispielsweise eine weitere Halteeinrichtung in eine Entnahmeposition transportiert werden.

Das Fahrzeugmodul oder mehrere, vereinzelte Fahrzeugmodule können insbesondere auf oder in einer Halteeinrichtung, beispielsweise in einer Box, z.B. einer Gitterbox, oder auf einer Palette, gelagert sein, wobei die Halteeinrichtung durch die Transporteinrichtung transportierbar ist. Hierbei ist vorstellbar, dass mehrere Halteeinrichtungen mit einem oder mehreren Fahrzeugmodulen zeitlich nacheinander durch die Transporteinrichtung in den Arbeitsraum transportiert werden, wobei die Fahrzeugmodule durch eine der Positioniereinrichtung gegriffen und an das Grundmodul oder die Modulgesamtheit montiert werden. Beispielsweise kann für einen ersten Montageschritt das Grundmodul und mindestens ein weiteres Fahrzeugmodul, beispielsweise auf/in einer gemeinsamen Halteeinrichtung, in den Arbeitsraum transportiert und dann jeweils gegriffen werden und dann aneinander montiert werden. Auf diese Weise können dann alle für die vollständige Montage benötigten Fahrzeugmodule in den Arbeitsraum der Vorrichtung transportiert werden, beispielsweise auf/in einer oder mehreren Halteeinrichtung(en). Während des Montageverfahrens erfolgt kein Transport des Grundmoduls oder der Modulgesamtheit aus dem Arbeitsraum der Vorrichtung heraus. Hierdurch verringert sich somit in vorteilhafter Weise ein Arbeitsraumbedarf der vorgeschlagenen Vorrichtung.

Die Fahrzeugmodule können in/auf der Halteeinrichtung volumenoptimiert angeliefert oder abtransportiert werden. Dies bedeutet, dass die Fahrzeugmodule mit einem möglichst geringen Volumenbedarf antransportiert oder abtransportiert werden. Somit ist es möglich, dass die Fahrzeugmodule den Arbeitsraum nicht automatisch in der Montagereihenfolge erreichen.

Es ist jedoch selbstverständlich möglich, dass Fahrzeugmodule oder Halteeinrichtungen durch separate ausgebildete Beförderungseinrichtungen, z.B. einen Gabelstapler, in den oder aus dem Arbeitsraum transportiert werden.

In einer weiteren Ausführungsform umfasst die Vorrichtung mindestens ein Mittel zur Identifikation eines Fahrzeugmoduls. Alternativ oder kumulativ kann die Vorrichtung mindestens ein Mittel zur Bestimmung einer Position und/oder Orientierung eines Fahrzeugmoduls umfassen. Das Mittel zur Identifikation kann hierbei gleich dem Mittel zur Bestimmung der Position und/oder Orientierung sein. Selbstverständlich kann das Mittel auch ein Mittel zur Bestimmung der Position und/oder Orientierung des Grundmoduls oder der Modulgesamtheit sein.

Das Mittel kann insbesondere mindestens eine Bilderfassungseinrichtung oder mehrere Bilderfassungseinrichtungen umfassen. Beispielsweise kann das Mittel ein Stereokamerasystem umfassen. Selbstverständlich kann das Mittel auch mindestens eine Auswerteeinrichtung zur Auswertung der Bilddaten bezüglich einer Identifikation und/oder Bestimmung einer Position und/oder Orientierung umfassen.

Beispielsweise kann bildbasiert eine Kennung des Fahrzeugmoduls identifiziert werden. In diesem Fall kann das Fahrzeugmodul eine bildbasiert oder optisch identifizierbare Kennung, aufweisen, beispielsweise einen Barcode.

Auch kann bildbasiert mindestens eine Eigenschaft des Fahrzeugmoduls, beispielsweise eine Form oder Größe, bestimmt werden, wobei in Abhängigkeit der Eigenschaft eine Identifikation des Fahrzeugmoduls erfolgt.

Alternativ oder kumulativ kann das Mittel zur Identifikation und/oder zur Bestimmung einer Position und/oder Orientierung eine RFID-Einrichtung umfassen. Hierbei kann über eine RFID-basierte Kommunikation eine Identifikation und/oder eine Bestimmung der Position und/oder Orientierung des Fahrzeugmoduls durchgeführt werden. Z.B. kann ein Fahrzeugmodul hierfür einen entsprechenden RFID-Chip aufweisen, wobei die Vorrichtung eine entsprechende Einrichtung zum Auslesen des RFID-Chips umfasst.

Insgesamt kann ein Fahrzeugmodul Eigenschaften und/oder Kennungen aufweisen, die durch ein geeignetes Verfahren und über geeignete Mittel bestimmbar sind, z.B. eine optische Eigenschaft, eine elektrische Eigenschaft, eine mechanische Eigenschaft oder eine weitere physikalische Eigenschaft, wobei die Identifikation dann in Abhängigkeit der Eigenschaft erfolgt, beispielsweise durch Abgleich mit vorbekannten Eigenschaften von Fahrzeugmodulen. Selbstverständlich kann auch eine Position und/oder Orientierung in Abhängigkeit derartiger Eigenschaften bestimmt werden.

Hierdurch kann in vorteilhafter Weise eine Fahrzeugmodulidentifikation durchgeführt werden, wobei in Abhängigkeit der Identifikation dann z.B. eine Auswahl eines Fahrzeugmoduls aus einer Anzahl greifbarer Fahrzeugmodule erfolgt.

Die Bestimmung der Position und/oder Orientierung kann ebenfalls mittels geeigneter Mittel durchgeführt werden, beispielsweise mittels eines Stereokamerasystems oder einer Laserscaneinrichtung.

In Abhängigkeit der Identifikation und/oder Position und/oder Orientierung des Fahrzeugmoduls bzw. der Modulgesamtheit kann dann eine entsprechende Betätigung des Fahrzeugmoduls, beispielsweise ein Greifen und/oder ein Positionieren des Fahrzeugmoduls bzw. der Modulgesamtheit durch eine Positioniereinrichtung, gesteuert werden.

Auch kann in Abhängigkeit der Identifikation, der Position und/oder Orientierung ein Greifmodul aus einer Gruppe von Greifmodulen gewählt werden und an einer Positioniereinrichtung montiert werden.

Selbstverständlich kann die vorgeschlagene Vorrichtung auch die entsprechenden Steuereinrichtungen, die z.B. als Recheneinrichtungen, beispielsweise als Mikrocontroller, ausgebildet sein können, umfassen. Mittels der Steuereinrichtungen können die Positioniereinrichtungen, die Transporteinrichtung und weitere Aktoren/Sensoren der Vorrichtung gesteuert werden. Beispielsweise können die Positioniereinrichtungen derart gesteuert werden, dass diese in der Montage/Demontage aktiv zusammenwirken. Beispielsweise können die Positioniereinrichtungen Fahrzeugmodule aneinander übergeben und/oder passgenau zusammenführen.

Weiter vorgeschlagen wird ein Verfahren zur Montage eines Fahrzeugs aus Fahrzeugmodulen oder zur Demontage eines Fahrzeugs in Fahrzeugmodule. Das vorgeschlagene Verfahren wird hierbei mittels einer Vorrichtung gemäß einer der vorhergehend erläuterten Ausführungsformen durchgeführt. Das vorgeschlagene Verfahren dient insbesondere einer Montage oder Demontage eines Elektrofahrzeugs.

Das Verfahren umfasst mindestens einen Montageschritt zur Montage eines weiteren Fahrzeugmoduls an einem Grundmodul oder an einer Modulgesamtheit oder einen

Montageschritt zur Demontage eines weiteren Fahrzeugmoduls von dem Grundmodul oder von der Modulgesamtheit. Die Modulgesamtheit umfasst das Grundmodul. Das Grundmodul bildet hierbei ein Fahrzeugmodul.

Selbstverständlich kann das vorgeschlagene Verfahren mehrere Montageschritte zur Montage jeweils eines weiteren Fahrzeugmoduls an dem Grundmodul oder an der Modulgesamtheit umfassen. Entsprechend kann das Verfahren auch mehrere Montageschritte zur Demontage jeweils eines Fahrzeugmoduls umfassen.

In dem mindestens einen Montageschritt wird das Grundmodul oder die Modulgesamtheit durch eine Hauptpositioniereinrichtung in eine Montageposition und Montageorientierung positioniert, wobei eine Position bzw. Lage und Orientierung des Grundmoduls oder der Modulgesamtheit verändert wird. In diesem Montageschritt wird also sowohl die Position als auch die Orientierung des Grundmoduls oder der Modulgesamtheit verändert. Dies kann auch als Grundmodulpositionierung bezeichnet werden, wobei die Grundmodulpositionierung einen Teilschritt des mindestens einen Montageschritts bilden kann.

Die Position des Grundmoduls oder der Modulgesamtheit kann beispielsweise eine Position eines Referenzpunkts des Grundmoduls oder der Modulgesamtheit sein, beispielsweise eines Mittelpunkts oder Schwerpunkts. Die Orientierung kann hierbei um mehr als ein vorbestimmtes Maß, beispielsweise um mehr als einen vorbestimmten Winkel, beispielsweise um mehr als 10°, 15°, 30° oder 45°, verändert werden, insbesondere mit Bezug auf eine oder mehrere Achse(n) des vorhergehend erläuterten Referenzkoordinatensystems. Entsprechend kann die Position eines Fahrzeugmoduls eine Position eines Referenzpunkts des Fahrzeugmoduls sein, beispielsweise eines Mittelpunkts oder Schwerpunkts.

Selbstverständlich kann in weiteren Montageschritten nur eine Position des Grundmoduls oder der Modulgesamtheit verändert werden, wobei keine Veränderung der Orientierung erfolgt. Auch kann in weiteren Montageschritten eine Orientierung des Grundmoduls oder der Modulgesamtheit erfolgen, wobei keine Veränderung der Position erfolgt. In mindestens einem, vorzugsweise mehreren, möglicherweise allen, Montageschritten wird aber sowohl die Position als auch die Orientierung des Grundmoduls oder der Modulgesamtheit verändert.

Während und/oder nach der Positionierung des Grundmoduls oder der Modulgesamtheit in die Montageposition und Montageorientierung wird das weitere Fahrzeugmodul an das Grundmodul oder die Modulgesamtheit montiert oder von dem Grundmodul oder der Modulgesamtheit demontiert. Dies kann auch als Modul(de)montierung bezeichnet werden, wobei die Modul(de)montierung ebenfalls einen Teilschritt des Montageschritts bilden kann.

Die Modul(de)montierung kann hierbei mittels der Hauptpositioniereinrichtung und/oder mittels einer Modulpositioniereinrichtung durchgeführt werden. Vorzugsweise erfolgt die Modul(de)montierung zumindest teilweise durch ein Zusammenwirken der Haupt- und Modulpositioniereinrichtung.

Die Montierung des weiteren Fahrzeugmoduls an dem Grundmodul oder der Modulgesamtheit kann, wie nachfolgend noch näher erläutert, das Herstellen einer mechanischen Verbindung zwischen dem Fahrzeugmodul und dem Grundmodul bzw. der Modulgesamtheit bedeuten. Diese Montage kann mehrere Teilschritte umfassen. Selbstverständlich können während der Montage auch weitere Verbindungen, z.B. elektrische, pneumatische, fluidtechnische oder signaltechnische Verbindungen, hergestellt werden. Entsprechend bedeutet die Demontage das Lösen der vorgenannten Verbindungen.

Auch kann in dem mindestens einen Montageschritt durch die Modulpositioniereinrichtung eine Position und/oder Orientierung des weiteren Fahrzeugmoduls verändert werden. Dies kann auch als Fahrzeugmodulpositionierung bezeichnet werden, wobei die Fahrzeugmodulpositionierung ebenfalls einen Teilschritt des Montageschritts bilden kann.

So kann auch das weitere Fahrzeugmodul in einer Montageposition und/oder Montageorientierung positioniert werden, wobei während oder nach der Positionierung des weiteren Fahrzeugmoduls in die Montageposition und Montageorientierung das weitere Fahrzeugmodul an das Grundmodul oder die Modulgesamtheit montiert oder von dem Grundmodul oder der Modulgesamtheit demontiert wird.

Selbstverständlich kann der mindestens eine Montageschritt mehrere zeitlich aufeinander folgende oder zeitlich parallele Fahrzeugmodul- und Grundmodulpositionierungen umfassen. So kann z.B. die Positionierung des Grundmoduls bzw. der Modulgesamtheit und/oder des weiteren Fahrzeugmoduls in die jeweilige Montageposition und/oder Montageorientierung in einer Positionierungssequenzen aus mehreren Schritten erfolgen, die zeitlich und/oder räumlich aufeinander abgestimmt sind. Insbesondere können die Positioniereinrichtungen während des mindestens einen Montageschritts derart zusammenwirken, dass das Grundmodul oder die Modulgesamtheit als auch das Fahrzeugmodul kollisionsfrei jeweils in ihre Montageposition und Montageorientierung positioniert werden, wobei während oder nach dieser Positionierung die Montage oder Demontage erfolgt.

Zumindest ein Teilschritt der Modul(de)montierung, insbesondere aber alle Teilschritte der Modul(de)montierung, kann/können hierbei zeitlich während oder nach der Fahrzeugmodul- und Grundmodulpositionierungen erfolgen. Es ist aber auch vorstellbar, dass zumindest ein Teilschritt der Modul(de)montierung zeitlich vor oder zeitlich nach der Fahrzeugmodul- und Grundmodulpositionierung erfolgt. Z.B. können ein weiteres Fahrzeugmodul und ein Grundmodul bzw. eine Modulgesamtheit während eines oder verschiedener Teilschritte der Modulmontierung passgenau zusammengeführt werden. Durch die Zusammenführung kann bereits eine mechanische Verbindung oder zumindest ein Teil davon hergestellt werden. In einem oder mehreren zeitlich danach folgenden Teilschritten kann dann eine mechanische Verbindung oder eine zusätzliche mechanische Verbindung hergestellt wird.

Auch kann zumindest ein Teilschritt der Modul(de)montierung durch mindestens eine weitere Montageeinrichtung durchgeführt werden. Die Montageeinrichtung dient hierbei also in diesem Montageschritt nicht der Grundmodul- oder Fahrzeugpositionierung. Beispielsweise kann eine Schraubverbindung durch die mindestens eine weitere Montageeinrichtung hergestellt werden. Ein solcher Teilschritt der Modulmontierung kann hierbei z.B. nach der Fahrzeugmodul- und Grundmodulpositionierung erfolgen. In diesem Fall kann die Vorrichtung zur Montage oder Demontage mindestens eine weitere Montageeinrichtung umfassen. Auch die weitere Montageeinrichtung kann als Gelenkarmroboter ausgebildet sein. Vorstellbar ist insbesondere, dass eine der Positioniereinrichtungen der Vorrichtung die weitere Montageeinrichtung, z.B. in dem entsprechenden Montageschritt, ausbildet. Selbstverständlich können auch noch weitere Montageeinrichtungen vorhanden sein.

In einer weiteren Ausführungsform wird das Grundmodul oder die Modulgesamtheit während des mindestens einen Montageschritts zumindest zeitweise auf einer Haltevorrichtung abgesetzt. Insbesondere kann das Grundmodul oder die Modulgesamtheit in der gewünschten Montageposition und Montageorientierung auf der Haltevorrichtung abgesetzt werden. Die Haltevorrichtung kann beispielsweise durch eine Bodenfläche ausgebildet sein. Auch kann die Haltevorrichtung z.B. als Ständersystem ausgebildet sein. Im abgesetzten Zustand kann ein Teil der oder die gesamte Gewichtskraft des Grundmoduls bzw. der Modulgesamtheit durch die Haltevorrichtung aufgenommen oder abgeleitet werden, z.B. in ein Fundament. Im abgesetzten Zustand kann eine mechanische Verbindung zwischen dem Grundmodul bzw. der Modulgesamtheit und der Hauptpositioniereinrichtung hergestellt oder gelöst sein.

Alternativ oder kumulativ kann das Grundmodul oder die Modulgesamtheit zumindest zeitweise, vorzugsweise jedoch ausschließlich, durch die Hauptpositioniereinrichtung gehalten werden. Dies kann bedeuten, dass das Grundmodul während des gesamten Montageschritts ausschließlich durch zumindest eine, beispielsweise die erste, Positioniereinrichtung gehalten wird. Hierbei kann insbesondere die Gewichtskraft und/oder die Trägheit des Grundmoduls oder der Modulgesamtheit ausschließlich durch Hauptpositioniereinrichtung kompensiert bzw. durch die Hauptpositioniereinrichtung bereitgestellt werden. In diesem Fall wird das Grundmodul oder die Modulgesamtheit also nicht auf einer Haltevorrichtung abgesetzt.

Umfasst das vorgeschlagene Verfahren mehrere Montageschritte, so ist vorstellbar, dass das Grundmodul oder die Modulgesamtheit während mehrerer, insbesondere aufeinanderfolgender, Montageschritte oder aller Montageschritte, insbesondere ausschließlich, durch eine Positioniereinrichtung gehalten wird. Dies bedeutet, dass während der vollständigen Montage oder Demontage kein Absetzen des Grundmoduls oder der Modulgesamtheit erfolgt.

Es ist jedoch nicht zwingend, dass das Grundmodul oder die Modulgesamtheit immer durch dieselbe Positioniereinrichtung gehalten wird. Vielmehr kann während eines Montageschritts oder während verschiedener Montageschritte eine Übergabe des Grundmoduls oder der Modulgesamtheit von einer Positioniereinrichtung an eine weitere Positioniereinrichtung erfolgen.

Hierdurch ergibt sich in vorteilhafter Weise eine zeitlich schnelle Montage oder Demontage, da kein zeitlich aufwendiger Transport des Grundmoduls oder der Modulgesamtheit während des mindestens einen Montageschritts, insbesondere jedoch zwischen verschiedenen Montageschritten, notwendig ist.

In einer weiteren Ausführungsform bildet das Grundmodul ein Bodenmodul aus. Der Fahrzeugboden des Fahrzeugs kann hierbei ein- oder mehrteilig ausgebildet sein, wobei das Grundmodul den einen Teil oder einen der Teile ausbilden kann.

Ein Bodenmodul kann somit einen Teil einer Bodengruppe des Fahrzeugs ausbilden. Die Bodengruppe kann hierbei Fixaktionspunkte für Achsen-, Fahrzeug- oder Fahrwerkskomponenten des Fahrzeugs aufweisen. Auch kann die Bodengruppe Fixaktionspunkte für einen Antriebsstrang aufweisen. Der Begriff Bodengruppe umfasst hierbei auch ein Fahrgestell, Chassis oder Rahmen. Ein Bodenmodul des Fahrzeugbodens, insbesondere das Grundmodul, kann hierbei mindestens eine Energiespeichereinrichtung, beispielsweise mindestens einen Akkumulator, insbesondere einen als Traktionsbatterie ausgebildeten Akkumulator, umfassen. Das Bodenmodul kann einen Teil der Fahrzeugkarosserie ausbilden.

Fahrzeugmodule im Sinne der Erfindung bezeichnen hierbei Module, die vollständige Funktionsgruppen eines Fahrzeuges, z.B. mindestens ein Federbein, mindestens eine Antriebseinheit, mindestens eine Achse, mindestens ein Lenksystem, mindestens eine Bremse, mindestens ein Instrument und/oder mindestens eine Anzeige umfassen können.

Ein Fahrzeugmodul kann insbesondere ein Fahrzeuginnenmodul oder ein Fahrzeugaußenmodul sein.

Ein Fahrzeugaußenmodul kann hierbei zumindest einen Teil einer äußeren Oberfläche, insbesondere einer Karosserie, des Fahrzeugs ausbilden. Ein Fahrzeuginnenmodul kann insbesondere keinen Teil der äußeren Oberfläche ausbilden, insbesondere vollständig innerhalb des Fahrzeugs, beispielsweise innerhalb der Fahrzeugkarosserie, angeordnet sein. Ein Fahrzeugaußenmodul kann insbesondere ein Frontmodul, ein Heckmodul, ein Türmodul, ein Dachmodul oder ein Radmodul sein. Ein Fahrzeuginnenmodul kann beispielsweise ein Armaturenmodul, ein Sitzmodul oder ein Energiespeichermodul sein. Dies ist jedoch nur eine beispielhafte Kategorisierung. So ist es z.B. auch möglich, dass ein Energiespeichermodul ein Außenmodul ausbildet, beispielsweise wenn ein Gehäuse des Batteriemoduls einen Teil einer äußeren Oberfläche des Fahrzeugs ausbildet.

Fahrzeugmodule bezeichnen hierbei endmontagefähige Module. Dies bedeutet, dass nach der Montage des entsprechenden Fahrzeugmoduls keine weitere Veränderung, insbesondere Oberflächenbehandlung, des Fahrzeugmoduls, insbesondere in Form von Lackieren, Verzinken oder weiterem, notwendig ist.

Alternativ oder kumulativ bildet ein weiteres Fahrzeugmodul ein weiteres Bodenmodul, ein Frontmodul, ein Heckmodul, ein Türmodul, ein Sitzmodul, ein Dachmodul, ein Lenkmodul, ein Armaturenmodul, ein Radmodul, ein Antriebsmodul, ein Energiespeichermodul oder ein Verbindungsmodul.

Ein Frontmodul kann hierbei zumindest eine Frontabdeckung umfassen oder aufweisen. Weiter kann ein Frontmodul eine Fronthaube, eine Frontscheibe, eine integrierte Armaturentafel, ein integriertes Lenkrad, mindestens einen Scheibenwischer und/oder Beleuchtungselemente, beispielsweise Frontscheinwerfer und/oder Blinklichter, umfassen. Das Frontmodul kann einen Teil der Fahrzeugkarosserie ausbilden.

Ein Heckmodul kann zumindest eine Heckabdeckung umfassen oder aufweisen. Weiter kann ein Heckmodul eine Heckklappe und/oder eine Heckscheibe und/oder Beleuchtungselemente, beispielsweise Rückscheinwerfer und/oder Blinklichter, umfassen oder aufweisen. Das Heckmodul kann einen Teil der Fahrzeugkarosserie ausbilden.

Ein Türmodul kann hierbei einen Teil einer Seitenwand des Fahrzeugs umfassen oder aufweisen oder ausbilden. Weiter kann ein Türmodul eine Scheibe, eine Scheibenhebereinrichtung und/oder entsprechende Bedienelemente aufweisen. Das Türmodul kann einen Teil der Fahrzeugkarosserie ausbilden.

Ein Armaturenmodul kann eine Armaturentafel aufweisen oder ausbilden. Weiter kann eine Armaturentafel unterschiedliche Bedienelemente umfassen oder aufweisen.

Ein Dachmodul kann zumindest einen Teil eines Fahrzeugdaches ausbilden. Das Fahrzeugdach kann hierbei ein- oder mehrteilig ausgebildet sein, wobei das Dachmodul einen oder mehrere dieser Teile ausbilden kann. Das Dachmodul kann einen Teil der Fahrzeugkarosserie ausbilden.

Ein Radmodul kann hierbei einen Radkasten aufweisen oder ausbilden. Weiter kann ein Radmodul eine Antriebseinrichtung, beispielsweise einen Radnabenmotor, und/oder eine Radaufhängungseinrichtung, z.B. eine Feder-Dämpfer-Einheit, und/oder einen Teil einer Bremseinrichtung und/oder Felge und/oder einen Reifen und/oder eine Antriebswelle und/oder zumindest ein Teil eines Lenksystems umfassen oder ausbilden.

Ein Sitzmodul kann hierbei zumindest einen Fahrzeugsitz aufweisen oder ausbilden. Ein Sitzmodul kann als Einzelsitz wie auch als Sitzbank mit mehr als einem Sitz ausgebildet sein.

Ein Antriebsmodul kann hierbei zumindest eine Antriebseinrichtung, beispielsweise einen Elektromotor, einen Verbrennungsmotor oder eine Brennstoffzelle, aufweisen oder ausbilden.

Ein Energiespeichermodul kann hierbei einen Akkumulator oder einen Tank ausbilden oder aufweisen.

Ein Verbindungsmodul kann hierbei mindestens eine elektrische Leitung, eine pneumatische Leitung, eine fluidtechnische Leitung oder eine Signalleitung, insbesondere eine Datenleitung, aufweisen oder ausbilden. Auch kann ein Verbindungsmodul ein Modul zur mechanischen Verbindung sein, insbesondere auch ein Modul zur Übertragung und/oder Umwandlung von Kräften und/oder Momenten, z.B. von einer Antriebseinrichtung zu einem Rad.

Ein Lenkmodul kann hierbei ein Lenkrad aufweisen oder ausbilden. Das Lenkrad kann insbesondere um eine Drehachse verschwenkbar sein, wobei die Drehachse nicht der Drehachse des Lenkrads entspricht.

Ein Pedalmodul kann ein Antriebspedal aufweisen oder ausbilden, welches z.B. eine Steuerung des Antriebs durch einen Fahrzeugführer ermöglicht. Auch kann ein Pedalmodul ein Bremspedal aufweisen oder ausbilden.

Ein Fahrzeugmodul kann hierbei insbesondere mindestens ein Verbindungselement zur Herstellung einer mechanischen, insbesondere einer mechanisch-lösbaren, Verbindung mit mindestens einem, insbesondere aber auch mehreren, weiteren Fahrzeugmodul(en), insbesondere dem Grundmodul oder einem Fahrzeugmodul der Modulgesamtheit, aufweisen. Das mindestens eine Verbindungselement kann beispielsweise ein Verbindungselement zur Herstellung einer form- und/oder kraftschlüssigen mechanischen Verbindung sein. Beispielsweise kann das Verbindungselement zur Herstellung einer Schraubverbindung, einer Rastverbindung, einer Klemmverbindung oder einer weiteren, insbesondere mechanisch lösbaren, Verbindungen, dienen. Selbstverständlich kann das mindestens eine weitere Fahrzeugmodul mindestens ein korrespondierendes Verbindungselement zur Herstellung der vorhergehend erläuterten Verbindung aufweisen.

Selbstverständlich ist es vorstellbar, dass Fahrzeugmodule alternativ oder, vorzugsweise, kumulativ, auch mittels nicht lösbarer mechanischer Verbindungen, z.B. kalter bzw. nicht thermischer, stoffschlüssiger Verbindungen, miteinander verbunden werden. Hierbei ist es insbesondere möglich, dass eine maximale Temperatur bei der Herstellung oder zur Herstellung einer stoffschlüssigen Verbindung kleiner als eine oder gleich einer vorbestimmten Temperatur ist, z.B. einer Temperatur entsprechend der Raumtemperatur, oder einer Temperatur von 100°C, 250°C, 500°C, 750°C, 1000°C oder 1500°C.

Alternativ oder kumulativ ist es möglich, dass beim Herstellen einer stoffschlüssigen Verbindung thermische Energie nur in den Bereich der Verbindungsstelle oder in einen vorbestimmten Bereich, der die Verbindungsstelle umfasst, derart eingeleitet wird, dass sich ausschließlich der Bereich der Verbindungsstelle oder der vorbestimmte Bereich erwärmt, insbesondere maximal um ein vorbestimmtes Maß. Ein Eintrag thermischer Energie beim Herstellen der stoffschlüssigen Verbindung, beispielsweise durch Wärmeleitung oder Funkenflug, in einen Bereich außerhalb des Bereichs der Verbindungsstelle oder des vorbestimmten Bereichs erfolgt nicht oder wird auf ein vorbestimmtes geringes Maß begrenzt. Hierdurch kann in vorteilhafter Weise eine unerwünschte temperaturbedingte Veränderung der Fahrzeugmodule außerhalb des Bereichs der Verbindungsstelle oder des vorbestimmten Bereichs vermieden werden.

Vorstellbar ist z.B., dass Fahrzeugmodule verklebt werden. Vorzugsweise werden Fahrzeugmodule aber ausschließlich mittels nicht-thermischer Fügeverfahren miteinander verbunden. Dies bedeutet, dass Fahrzeugmodule insbesondere nicht verschweißt werden.

Selbstverständlich kann ein Fahrzeugmodul auch ein Verbindungselement zur Herstellung einer elektrischen Verbindung und/oder einer pneumatischen Verbindung und/oder fluidtechnischen Verbindung und/oder einer signaltechnischen Verbindung aufweisen.

Hierdurch ergibt sich in vorteilhafter Weise ein einfach montierbarer modularer Aufbau des Fahrzeugs und somit eine einfach durchzuführende modulare Montage oder Demontage.

In einer weiteren Ausführungsform wird das Fahrzeug zumindest teilweise von innen nach außen montiert oder zumindest teilweise von außen nach innen demontiert.

Dies kann bedeuten, dass an dem Grundmodul oder der Modulgesamtheit zeitlich vor einem oder mehreren oder allen Fahrzeugaußenmodulen, die vorhergehend bereits erläutert wurden, ein oder mehrere oder alle Fahrzeuginnenmodule montiert werden. Beispielsweise kann zeitlich vor einem Frontmodul und/oder einem Heckmodul und/oder einem Dachmodul und/oder einem Türmodul ein Sitzmodul und/oder ein Lenkmodul und/oder ein Armaturenmodul montiert werden.

Hierdurch ergibt sich in vorteilhafter Weise, dass Fahrzeuginnenelemente nicht in aufwendiger Weise durch Öffnungen in der Fahrzeugkarosserie in einen Innenraum des Fahrzeugs zur Montage eingebracht werden müssen. Hierdurch wird in vorteilhafter Weise der Montage- bzw. Demontageprozess vereinfacht.

In einer weiteren Ausführungsform wird ein weiteres Fahrzeugmodul mechanisch demontierbar an dem Grundmodul oder der Modulgesamtheit befestigt. Mechanisch demontierbar kann bedeuten, dass das Fahrzeugmodul mechanisch lösbar an dem Grundmodul oder der Modulgesamtheit befestigt wird. Mechanisch demontierbar kann insbesondere bedeuten, dass weder das Fahrzeugmodul noch das Grundmodul oder die Modulgesamtheit bei einer Demontage beschädigt, z.B. in ihrer Form plastisch verändert, werden müssen. Somit kann der Begriff demontierbar bedeuten, dass das Fahrzeugmodul mittels eines Formschlusses und/oder mittels eines Kraftschlusses mit dem Grundmodul oder der Modulgesamtheit mechanisch verbunden wird. Auch ein Stoffschluss ist möglich, beispielsweise ein Verkleben. Nicht demontierbare Verbindungen können im Bereich des Stoffschlusses jedoch insbesondere auf thermischen Fügeverfahren beruhende Verbindungen, z.B. Schweißen oder Löten, sein. Insbesondere können demontierbare stoffschlüssige Verbindungen solche Verbindungen sein bei deren Herstellung oder zu deren Herstellung eine Maximaltemperatur kleiner als eine oder gleich einer vorbestimmten Temperatur ist, wobei diese Temperaturen vorhergehend erläutert wurden.

Hierdurch ergibt sich in vorteilhafter Weise, dass das mittels des vorgeschlagenen Verfahrens hergestellte Fahrzeug ohne Aufwand und möglichst ohne Zerstörung wieder demontierbar ist.

In einer weiteren Ausführungsform umfasst der mindestens eine Montageschritt noch mindestens einen der folgenden Teilschritte:
- Identifikation eines Fahrzeugmoduls,
- Bestimmung einer Position und/oder Orientierung eines Fahrzeugmoduls,
- Greifen eines Fahrzeugmoduls,
- Bestimmung einer Position und/oder Orientierung des Grundmoduls oder der Modulgesamtheit,
- Greifen des Grundmoduls und/oder der Modulgesamtheit,
- Wechseln eines Greifmoduls der ersten und/oder der mindestens einen weiteren Positioniereinrichtung.

Insbesondere können während des mindestens einen Montageschritts, aber auch während mehrerer Montageschritte, das Grundmodul bzw. die Modulgesamtheit und/oder Fahrzeugmodule identifiziert, gegriffen, positioniert, abgesetzt, an eine weitere Positioniereinrichtung übergeben und/oder, insbesondere passgenau, zusammengeführt werden.

In einer weiteren Ausführungsform erfolgt die Montage oder die Demontage, insbesondere die vollständige Montage oder Demontage, in einem Arbeitsraum, wobei eine maximale Dimension des Arbeitsraums kleiner als oder gleich 25m ist. Dies wurde vorhergehend bereits erläutert. Hierdurch reduziert sich in vorteilhafter Weise ein Bauraumbedarf für die entsprechende Vorrichtung sowie der benötigte Arbeitsraum, sodass eine insbesondere dezentrale Montage oder Demontage von Fahrzeugen möglich wird.

In einer weiteren Ausführungsform wird/werden zeitlich vor dem mindestens einen Montageschritt ein oder mehrere Fahrzeugmodule in den Arbeitsraum transportiert oder nach dem mindestens einen Montageschritt aus dem Arbeitsraum abtransportiert.

Ein Fahrzeugmodul oder mehrere Fahrzeugmodule können hierbei, insbesondere volumenoptimiert, auf oder in mindestens einer Halteeinrichtung, z.B. einer Palette oder einer Box, in den Arbeitsraum transportiert werden. Dann können das Fahrzeugmodul sowie gegebenenfalls eine Position und/oder Orientierung des Fahrzeugmoduls identifiziert werden. Abhängig von dem identifizierten Fahrzeugmodul kann dieses dann von oder aus der Halteeinrichtung entnommen und montiert werden.

Insbesondere können Fahrzeugmodule nicht in Montagereihenfolge in den Arbeitsraum transportiert werden oder nicht in Demontagereihenfolge aus dem Arbeitsraum transportiert werden.

Somit kann während des vorgeschlagenen Verfahrens eine Modullogistik innerhalb des vorhergehend beschriebenen Arbeitsraumvolumens durchgeführt werden.

Insbesondere ist es möglich, dass versucht wird, dass entsprechend einer gewünschten Montagereihenfolge als nächstes zu montierende Fahrzeugmodul in einer Menge von im Arbeitsraum oder in einer vorhergehend erläuterten Entnahmeposition befindlichen Fahrzeugmodulen zu identifizieren. Kann dieses Fahrzeugmodul identifiziert werden, so kann das Fahrzeugmodul gegriffen und entsprechend den vorhergehend getätigten Ausführungen montiert werden. Kann das Fahrzeugmodul nicht identifiziert werden, so kann ein entsprechendes Signal erzeugt werden, wobei das fehlende Fahrzeugmodul dann in den Arbeitsraum oder in eine Entnahmeposition transportiert werden kann oder ein entsprechendes Fehlersignal erzeugt wird. Alternativ kann jedoch entsprechend einer alternativen Montagereihenfolge auch ein alternatives Fahrzeugmodul identifiziert und montiert werden.

Weiter beschrieben wird ein modulares Fahrzeug, wobei das Fahrzeug mindestens ein Grundmodul und mindestens ein Fahrzeugmodul, vorzugsweise jedoch mehrere Fahrzeugmodule, umfasst, wobei die Fahrzeugmodule mechanisch demontierbar aneinander befestigt sind. Das modulare Fahrzeug kann insbesondere ein Elektrofahrzeug, weiter insbesondere ein Elektrofahrzeug mit mindestens einem Radnabenantrieb sein. Insbesondere kann das modulare Fahrzeug durch ein Verfahren gemäß einer der vorhergehend beschriebenen Ausführungsformen und/oder mittels einer Vorrichtung gemäß einer der vorhergehenden Ausführungen hergestellt sein.

Weiter kann das Grundmodul zumindest einen Teil eines Fahrzeugbodens ausbilden. Alternativ oder kumulativ ist das Fahrzeugmodul ein weiteres Bodenmodul oder ein Frontmodul oder ein Heckmodul oder ein Türmodul oder ein Sitzmodul oder ein Dachmodul oder ein Lenkmodul oder ein Pedalmodul oder ein Armaturenmodul oder ein Radmodul oder ein Antriebsmodul oder ein Energiespeichermodul oder ein Verbindungsmodul. Hierbei wird auf die vorhergehenden Erläuterungen zu den Fahrzeugmodulen Bezug genommen.

Weiter können mindestens zwei Fahrzeugmodule derselben Modulkategorie die gleiche oder eine symmetrische geometrische Form aufweisen, insbesondere im montierten Zustand.

Eine gleiche geometrische Form kann bedeuten, dass die Fahrzeugmodule eine gleiche äußere Form, beispielsweise gleiche Umrisse und/oder Dimensionen und/oder Topologien aufweisen. Auch können mindestens zwei Fahrzeugmodule derselben Modulkategorie mindestens eine äußere Oberfläche mit der gleichen Form oder Topologie aufweisen. Dies schließt jedoch nicht aus, dass diese Module voneinander verschiedene Bauteile, z.B. innenliegenden Bauteile, umfassen können. Allerdings können die Module auch vollständig identisch ausgebildet sein.

Eine symmetrische geometrische Form kann bedeuten, dass die Fahrzeugmodule vollständig oder zumindest teilweise spiegel- bzw. achssymmetrisch oder flächensymmetrisch ausgebildet sind. Beispielsweise können die Fahrzeugmodule jeweils einen Oberflächenabschnitt, beispielsweise eine äußere Oberfläche, die insbesondere im montierten Zustand einen Teil einer äußeren Oberfläche des Fahrzeugs ausbilden kann, aufweisen, die flächensymmetrisch zueinander ausgebildet sind.

Die Symmetrie kann sich insbesondere auf einen montierten Zustand der Fahrzeugmodule beziehen bzw. in dem montierten Zustand gegeben sein. Eine Symmetrieachse kann beispielsweise eine Fahrzeuglängsache (Rollachse), eine Fahrzeugquerachse (Nickachse) oder eine Fahrzeughochachse (Gierachse) sein. Eine Symmetrieebene kann beispielsweise senkrecht zu der Fahrzeuglängsache oder zu der Fahrzeugquerachse oder zu der Fahrzeughochachse orientiert sein.

Hierbei kann/können eine oder mehrere Modulkategorie(n) existieren, wobei einer Modulkategorie ein oder mehrere Fahrzeugmodul(e) des Fahrzeugs zugeordnet sein können.

Beispielsweise können einer Modulkategorie "Türmodul" zwei, drei oder vier zu montierende Türmodule des Fahrzeuges zugeordnet sein. Die Türmodule können z.B. jeweils eine rechte Vordertür, eine rechte Hintertür, eine linke Vordertür oder eine linke Hintertür ausbilden. Hierbei können jeweils zwei der vier Türmodule, insbesondere Türaußenflächen der zwei Türmodule, flächensymmetrisch im Bezug auf eine Symmetrieebene, die senkrecht zu der Fahrzeuglängsachse orientiert ist, ausgebildet sein, beispielsweise eine linke Vordertür und eine linke Hintertür sowie eine rechte Vordertür und eine linke Vordertür.

Weiter beispielsweise können einer Modulkategorie "Fahrzeugendmodul" ein Heckmodul und ein Frontmodul des Fahrzeugs zugeordnet sein. Weiter können einer Modulkategorie "Sitzmodul" alle Sitzmodule des Fahrzeugs zugeordnet sein, wobei mindestens zwei Sitzmodule die gleiche oder eine symmetrische geometrische Form aufweisen können. Auch können alle Sitzmodule des Fahrzeugs die gleiche oder eine symmetrische geometrische Form aufweisen.

Weiter können einer Modulkategorie "Radmodul" alle Räder zugeordnet sein, wobei mindestens zwei oder aber alle Radmodule die gleiche oder eine symmetrische geometrische Form aufweisen. Beispielsweise können alle Vorderräder und Hinterräder des Fahrzeugs die gleiche oder eine symmetrische geometrische Form aufweisen.

Auch kann eine Modulkategorie mehrere Unterkategorien, denen jeweils Fahrzeugmodule mit gleicher oder symmetrischer geometrischer Form zugeordnet sind, umfassen, wobei allen Unterkategorien Fahrzeugmodule der gleichen Modulkategorie zugeordnet sind, verschiedenen Unterkategorien jedoch Fahrzeugmodule mit unterschiedlichen geometrischen oder mit zueinander asymmetrischen Formen. Beispielsweise kann die Modulkategorie "Sitzmodul" mehrere Unterkategorien umfassen, wobei eine Unterkategorie Sitzmodule mit gleichen oder symmetrischen geometrischen Formen umfasst. Z.B. können einer ersten Unterkategorie ein rechter Vordersitz und einen rechter Rücksitz und einer weiteren Unterkategorie ein linker Vordersitz und ein linker Rücksitz zugeordnet sein. Ein Fahrzeugmodul der Modulkategorie "Sitzmodul" kann aber auch eine Sitzbank sein.

Beispielsweise kann auch die Modulkategorie "Radmodul" mehrere Unterkategorien umfassen. Z.B. können einer ersten Unterkategorie ein rechtes Vorderrad und ein linkes Vorderrad und einer weiteren Unterkategorie ein rechtes Hinterrad und ein linkes Hinterrad zugeordnet sein. Auch können Radmodule der gleichen (Unter-)Kategorie jeweils eine Antriebseinheit, z.B. einen Radnabenmotor, und/oder eine Radaufhängung aufweisen.

Weiter können zwei Fahrzeugmodule mit gleicher geometrischer Form symmetrisch zueinander montiert sein. Beispielsweise kann ein Fahrzeugmodul, welches eine linke Vordertür ausbildet, in Bezug auf eine erste Symmetrieebene senkrecht zur Fahrzeuglängsachse und in Bezug auf eine weitere Symmetrieebene senkrecht zur Fahrzeugquerachse symmetrisch zu einem Fahrzeugmodul, welches eine rechte Hintertür ausbildet, montiert sein/werden.

Hierdurch ergibt sich in vorteilhafter Weise ein vereinfacht zu fertigendes modulares Fahrzeug sowie eine vereinfachte Montage. Insbesondere können Fahrzeugmodule standardisiert bereitgestellt und dann durch standardisierte Montageschritte, insbesondere Positionierungen, montiert werden.

Die Erfindung wird anhand mehrere Ausführungsbeispiele näher erläutert. Die Figuren zeigen:
- Fig. 1: eine Seitenansicht eines modularen Fahrzeugs,
- Fig. 2: eine schematische Explosionsdarstellung eines modularen Fahrzeugs und
- Fig. 3: eine schematische Draufsicht auf eine erfindungsgemäße Vorrichtung.

Nachfolgend bezeichnen gleiche Bezugszeichen Elemente mit gleichen oder ähnlichen technischen Merkmalen.

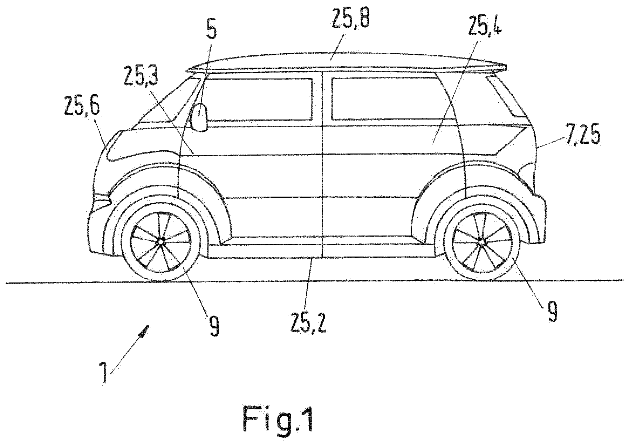

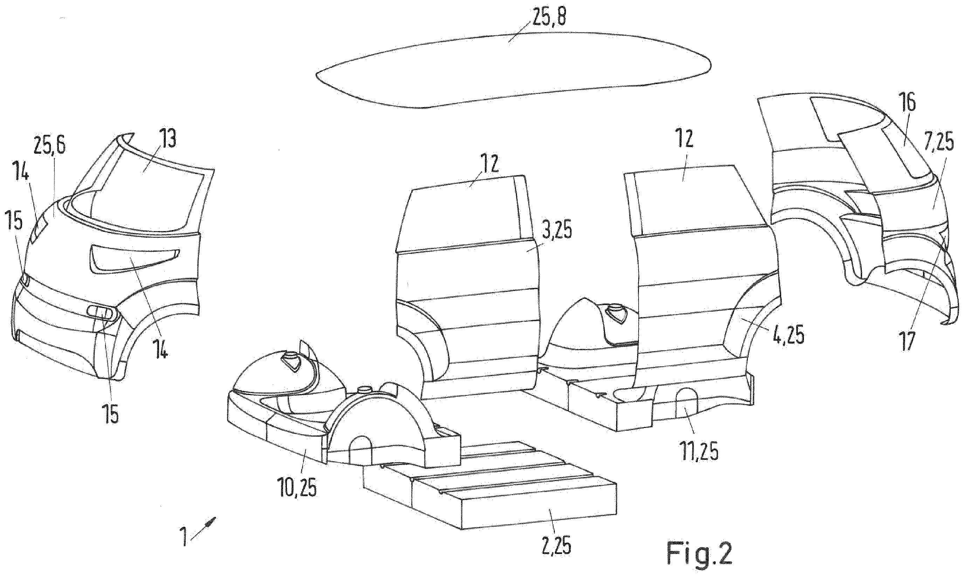

In Fig. 1 ist eine Seitenansicht eines modularen Fahrzeugs 1 dargestellt. Das modulare Fahrzeug 1 besteht aus mehreren Fahrzeugmodulen 25, die in Fig. 2 beispielhaft näher erläutert sind, wobei die Fahrzeugmodule 25 mechanisch demontierbar aneinander befestigt sind. In Fig. 1 ist insbesondere ein linkes Vordertürmodul 3 und ein linkes Hintertürmodul 4 dargestellt. Das linke Vordertürmodul 3 sowie das linke Hintertürmodul 4 sind hierbei einer Modulkategorie "Türmodul" zugeordnet. Hierbei ist dargestellt, dass das linke Vordertürmodul 3 und das linke Hintertürmodul 4 im montierten Zustand eine im Bezug auf eine Symmetrieebene senkrecht zu einer Fahrzeuglängsachse flächensymmetrische geometrische Form aufweisen, insbesondere eine flächensymmetrische Topologie einer Türaußenfläche der Türmodule 3, 4. An das linke Vordertürmodul 3 ist im Unterschied zum linken Hintertürmodul 4 zusätzlich ein Außenspiegel 5 montiert, wobei der Außenspiegel 7 nicht Teil des linken Vordertürmoduls 3 ist. Weiter dargestellt sind ein Grundmodul 2, ein Frontmodul 6, ein Heckmodul 7, ein Dachmodul 8 sowie Räder 9. Die Räder 9 können hierbei ebenfalls ein Fahrzeugmodul 25 ausbilden, beispielsweise falls die Räder 9 einen Teil einer Aufhängung, z.B. eine Feder-Dämpfer-Einheit, umfassen.

In Fig. 2 ist eine schematische Explosionsdarstellung des in Fig. 1 dargestellten modularen Fahrzeugs 1 dargestellt. Hierbei sind jedoch nicht alle Fahrzeugmodule 25 des modularen Fahrzeuges 1 sondern nur beispielhafte Fahrzeugmodule 25 dargestellt. Dargestellt ist insbesondere ein Grundmodul 2, welches ein erstes Bodenmodul, das auch als zentrales Bodenmodul bezeichnet werden kann, bildet. Weiter dargestellt ist ein zweites Bodenmodul 10 und ein drittes Bodenmodul 11, wobei das erste, das zweite und das dritte Bodenmodul 2, 10, 11 eine Bodengruppe des modularen Fahrzeugs 1 ausbilden. Das zweite Bodenmodul 10 kann hierbei mindestens eine Antriebseinheit, beispielsweise mindestens einen Radnabenmotor (nicht dargestellt), umfassen. Weiter umfassen das zweite und das dritte Bodenmodul 10, 11 jeweils nicht dargestellte Befestigungselemente zur Befestigung von jeweils zwei Radmodulen oder zwei Rädern 9 (siehe Fig. 1). Die Antriebseinheit kann hierbei auch Teil eines Radmoduls sein.

Weiter dargestellt sind das linke Vordertürmodul 3 und das linke Hintertürmodul 4, wobei in Fig. 2 wiederum ersichtlich ist, dass dieses Module 3, 4, insbesondere deren äußere Oberfläche, weiter insbesondere der Teil der äußeren Oberfläche, der auch eine äußere Oberfläche des Fahrzeugs 1 bildet, die vorhergehend erläuterte flächensymmetrische Form oder Topologie aufweisen. Weiter dargestellt ist, dass das linke Vordertürmodul 3 und das linke Hintertürmodul 4 jeweils eine Scheibe 12 aufweisen.

Ebenfalls ist dargestellt das Frontmodul 6, welches eine Frontscheibe 13 aufweist. Weiter weist das Frontmodul 6 Frontleuchten 14 und Blinkeinrichtungen 15 auf. Ebenfalls dargestellt ist das Heckmodul 7, welches eine Heckscheibe 16 aufweist. Ebenfalls dargestellt ist, dass das Heckmodul 7 eine Heckleuchte 17 aufweist. Weiter dargestellt ist das Dachmodul 8.

Die in Fig. 2 dargestellten Fahrzeugmodule 25 weisen hierbei jeweils mindestens ein Verbindungselement zur mechanischen Verbindung mit dem Grundmodul 2 und/oder mit mindestens einem weiteren Fahrzeugmodul 25 auf. Somit können die in Fig. 2 dargestellten Fahrzeugmodule 25 aneinander montiert werden, wodurch ein fahrbetriebsbereites modulares Fahrzeug 1 hergestellt werden kann.

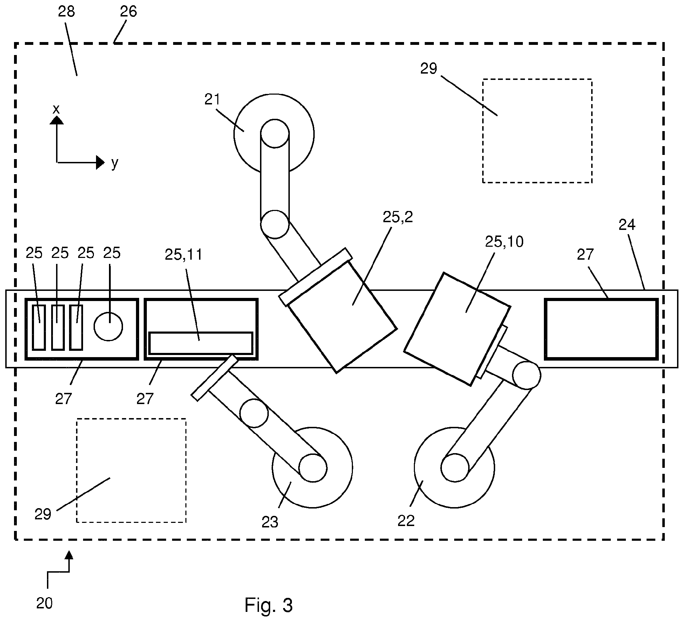

In Fig. 3 ist eine schematische Draufsicht auf eine erfindungsgemäße Vorrichtung 20 dargestellt. Die Vorrichtung 20 dient zur Montage oder Demontage eines modularen Fahrzeuges 1 (siehe Fig. 1). Die Vorrichtung 20 umfasst einen ersten Gelenkarmroboter 21, einen zweiten Gelenkarmroboter 22 und einen dritten Gelenkarmroboter 23. In dem in Fig. 3 dargestellten Ausführungsbeispiel bildet der erste Gelenkarmroboter 21 eine Hauptpositioniereinrichtung, wobei der zweite und der dritte Gelenkarmroboter 22, 23 jeweils Modulpositioniereinrichtungen ausbilden. Weiter umfasst die Vorrichtung 20 eine als Förderband 24 ausgebildete Transporteinrichtung. Auf dem Förderband 24 werden Fahrzeugmodule 25 in einen Arbeitsraum 26 der Vorrichtung 1 transportiert. Hierbei ist dargestellt, dass die Fahrzeugmodule 25 auf Halteeinrichtungen 27 gelagert sind, wobei die Halteeinrichtungen 27 beispielsweise als Transporthilfen, insbesondere als Europaletten oder Kisten, ausgebildet sein können.

Das Förderband 24 erstreckt sich hierbei durch einen Arbeitsraum 26 der Vorrichtung 20 hindurch, wobei ein freies Ende des Förderbands 24 außerhalb des Arbeitsraums angeordnet ist. Hierbei ragt das freie Ende jedoch nur weniger als ein vorbestimmtes Maß, beispielsweise weniger als 5m, 2.5m oder 1 m aus dem Arbeitsraum 26 heraus. Dargestellt ist weiter, dass im Bereich des freien Endes des Förderbands 24 eine unbestückte Halteeinrichtung 27 in einer Zwischenlagerposition auf dem Förderband 24 angeordnet ist. In einem zentralen Bereich des Arbeitsraums 26 auf dem Förderband befindliche Halteeinrichtungen 27 befinden sich in einer Entnahmeposition.

Weiter dargestellt ist, dass der erste Gelenkarmroboter 21 ein Grundmodul 2 greift, wodurch eine Position und eine Orientierung des Grundmoduls 2 durch den ersten Gelenkarmroboter 21 veränderbar ist. Der zweite Gelenkarmroboter 22 greift ein weiteres Fahrzeugmodul 25, beispielsweise das in Fig. 2 dargestellte zweite Bodenmodul 10. Durch den zweiten Gelenkarmroboter 22 ist somit eine Position und Orientierung des zweiten Bodenmoduls 10 veränderbar.

Weiter dargestellt ist, dass der dritte Gelenkarmroboter 23 ein weiteres Fahrzeugmodul 25, beispielsweise das in Fig. 2 dargestellte dritte Bodenmodul 11, welches noch auf der Halteeinrichtung 27 gelagert ist, greift, um es am Grundmodul 2 zu montieren.

Dargestellt ist weiter ein Referenzkoordinatensystem. Eine erste Raumrichtung x, die auch als longitudinale Richtung bezeichnet werden kann, und eine zweite Raumrichtung y, die auch als laterale Raumrichtung bezeichnet werden kann, spannen hierbei eine Ebene auf, die parallel zu einer Bodenfläche 28 orientiert sein kann. Eine dritte, nicht dargestellte, Raumrichtung, die auch als vertikale Raumrichtung bezeichnet werden kann, kann aus der Zeichenebene auf den Betrachter zur orientiert sein. Translationsbewegungen, die z.B. eine Veränderung der Position eines Fahrzeugmoduls 25 beschreiben können, können hierbei entlang der erläuterten Raumrichtungen x, y gemessen werden. Rotationsbewegungen, die z.B. eine Veränderung der Orientierung eines Fahrzeugmoduls 25 beschreiben können, können hierbei als Rotationen um die erläuterten Raumrichtungen x, y gemessen werden.

Der Arbeitsraum 26 kann hierbei vorbestimmte Dimensionen aufweisen, beispielsweise eine vorbestimmte Länge entlang der ersten Raumrichtung x, eine vorbestimmte Breite entlang der zweiten Raumrichtung y und eine vorbestimmte Höhe entlang der dritten Raumrichtung. Die zweite Raumrichtung y kann insbesondere einer Transportrichtung des Förderbandes 24 entsprechen.

Nicht dargestellte ist ein Mittel zur Identifikation eines Fahrzeugmoduls 25, wobei dieses Mittel zur Identifikationen auch zur Bestimmung einer Position und Orientierung eines Fahrzeugmoduls 25 bzw. einer Modulgesamtheit dienen kann. Weiter nicht dargestellt sind Steuereinrichtungen, die den Betrieb der Gelenkarmroboter 21, 22, 23 sowie den Betrieb des Förderbandes 24 steuern.

Nachfolgend wird beispielhaft ein Montageverfahren beschrieben. Mittels ersten Gelenkarmroboters 21 kann ein Grundmodul 2, welches auf einer Halteeinrichtung 27 gelagert ist, gegriffen werden. Das Grundmodul 2 kann dann durch den ersten Gelenkarmroboter 21 aus der Halteeinrichtung 27 entnommen und in eine gewünschte Montageposition und Montageorientierung positioniert werden, wobei sowohl eine Translationsbewegung als auch eine Rotationsbewegung des Grundmoduls 2 durchgeführt wird. In der gewünschten Montageposition und -orientierung kann das Grundmodul 2 auf der Bodenfläche 28 abgesetzt sein oder durch den ersten Gelenkarmroboter 21 in der dritten Raumrichtung über, insbesondere mit einem vorbestimmten Mindestabstand über, der Bodenfläche 28 gehalten werden.

Zeitlich parallel oder danach kann der zweite und/oder der dritte Gelenkarmroboter 22, 23 ein weiteres Bodenmodul, beispielsweise das in Fig. 2 dargestellte zweite Bodenmodul 10 greifen und ebenfalls in eine Montageposition und -orientierung positionieren. Das zweite Bodenmodul 10 kann beispielsweise als Achsmodul ausgebildet sein. Nach der Positionierung in den Montagepositionen und-orientierungen und/oder während dieser Positionierungen kann dann das zweite Bodenmodul 10 an dem Grundmodul 2 montiert werden. Entsprechend kann dann ein drittes Bodenmodul 11 (siehe Fig. 2) durch den zweiten und/oder den dritten Gelenkarmroboter 22, 23 gegriffen und an dem Grundmodul 2 montiert werden. Während und/oder nach diesen Positionierungen können korrespondierende Befestigungsmittel miteinander in Wechselwirkung treten bzw. gebracht werden.

Hiernach können der zweite und/oder dritte Gelenkarmroboter, insbesondere jeweils, ein Rad 9 (siehe Fig. 1) von einer Halteeinrichtung 27 greifen. Diese Räder 9 können beispielsweise auf der Bodenfläche 28 in einer gewünschten Montageposition und - orientierung abgelegt werden. Alternativ kann ein Rad 9 durch einen oder beide der Gelenkarmroboter 22, 23 gehalten werden. Hiernach können wiederum die Position und die Orientierung einer Modulgesamtheit, die nunmehr aus dem Grundmodul 2 und dem zweiten sowie dem dritten Bodenmodul 10, 11 besteht, derart verändert werden, dass Mittelachsen eines Rades 9 und einer Achse der Modulgesamtheit oder des vorhergehend erläuterten Achsmoduls fluchten. Dann kann die Modulgesamtheit derart auf das Rad 9 zubewegt werden, dass dieses passgenau an oder auf der Achse des Achsmoduls befestigt werden kann. Dies kann zeitlich nacheinander für alle vier Räder erfolgen, wobei jeweils eine Position und/oder Orientierung der Modulgesamtheit verändert werden kann.

Hiernach kann die Modulgesamtheit, die nunmehr zusätzlich vier montierte Räder 9 umfasst, auf der Bodenfläche 28 abgesetzt werden. Der zweite und/oder der dritte Gelenkarmroboter 22, 23 kann dann ein Energiespeichermodul, welches eine Traktionsbatterie umfassen und ebenfalls auf einer Halteeinrichtung 27 gelagert sein kann, greifen und nach einer Veränderung der Position und Orientierung in eine entsprechende Öffnung im Grundmodul 2 einschieben. Hierbei können mechanische, elektrische und signaltechnische Verbindungen hergestellt werden.

Die Modulgesamtheit kann hiernach wiederum in ihrer Position und Orientierung verändert werden und auf der Bodenfläche 28 in einer gewünschten Montageposition und -orientierung abgesetzt werden. Alternativ kann die Position und Orientierung der Modulgesamtheit unverändert bleiben. Mittels dem zweiten und/oder dritten Gelenkarmroboter 22, 23 kann dann ein Lenkmodul, beispielsweise ein auf einer Halteeinrichtung 27 gelagertes Lenkmodul, gegriffen und mittels einer Positionierung in einer gewünschten Montageposition und -orientierung an der Modulgesamtheit montiert werden. Das Lenkmodul kann hierbei ein verschwenkbares Lenkrad aufweisen, wobei das Lenkrad durch eine Schwenkbewegung entweder in eine erste Stellung, in der das Lenkrad entlang einer Fahrzeuglängsachse vor einem linken Vordersitz angeordnet ist, oder in eine zweite Stellung, in der das Lenkrad entlang einer Fahrzeuglängsachse vor einem rechten Vordersitz angeordnet ist, gebracht werden. Nach der Verschwenkung kann das Lenkrad in der entsprechenden Stellung festgelegt werden.

Weiter können ein oder mehrere Sitzmodule mittels der Gelenkarmroboter 22, 23 gegriffen und an der Modulgesamtheit montiert werden, wobei die Position und/oder Orientierung der entsprechenden Modulgesamtheit in den jeweiligen Montageschritten verändert werden kann oder konstant ist.

Auf diese Weise kann das modulare Fahrzeug 1 vollständig montiert werden, wobei nach der vollständigen Montage ein fahrbetriebsbereites Fahrzeug 1 hergestellt ist.

Es ist auch möglich, dass der erste Gelenkarmroboter 21, der zweite Gelenkarmroboter 22 oder der dritte Gelenkarmroboter 23 ein Fahrzeugmodul 25 von einer Halteeinrichtung 27 entnehmen und zwischenlagern. Hierbei kann ein Fahrzeugmodul 25 während eines Montageschrittes oder während mehrerer Montageschritte zumindest zeitweise auf einer Haltevorrichtung abgesetzt werden. Eine derartige Haltevorrichtung kann beispielsweise ein Abschnitt 29 der Bodenfläche 28 sein. Beispielsweise kann ein Gelenkarmroboter 21, 22, 23 ein Dachmodul 8 (siehe Fig. 2) greifen und von der Halteeinrichtung 27 zu einer Abstellfläche 29 transportieren und dort ablegen. Hiernach kann der gleiche Gelenkarmroboter 21, 22, 23 ein weiteres Fahrzeugmodul 25 greifen und an einer gegebenenfalls bereits vorhandenen Modulgesamtheit montieren. Zeitlich nach dieser Montage kann dann wieder das abgelegte Dachmodul 8 gegriffen und montiert werden.

In entsprechender Weise kann ein modulares Fahrzeug 1 durch die in Fig. 3 dargestellte Vorrichtung 20 demontiert werden.

### Bezugszeichenliste

- 1: Fahrzeug
- 2: Grundmodul
- 3: linkes Vordertürmodul
- 4: linkes Hintertürmodul
- 5: Außenspiegel
- 6: Frontmodul
- 7: Heckmodul
- 8: Dachmodul
- 9: Rad
- 10: zweites Bodenmodul
- 11: drittes Bodenmodul
- 12: Scheibe
- 13: Scheibe
- 14: Frontleuchte
- 15: Blinker
- 16: Scheibe
- 17: Heckleuchte
- 20: Vorrichtung
- 21: erster Gelenkarmroboter
- 22: zweiter Gelenkarmroboter
- 23: dritter Gelenkarmroboter
- 24: Förderband
- 25: Fahrzeugmodul
- 26: Arbeitsraum
- 27: Halteeinrichtung
- 28: Grundfläche
- 29: Abstellfläche

## Patentansprüche

1. Vorrichtung zur Montage oder Demontage eines Fahrzeugs (1) aus Fahrzeugmodulen (25), wobei die Vorrichtung (20) eine erste Positioniereinrichtung und mindestens eine weitere Positioniereinrichtung umfasst, wobei eine Position eines Grundmoduls (2) oder einer Modulgesamtheit durch eine Hauptpositioniereinrichtung veränderbar ist, wobei die Modulgesamtheit das Grundmodul (2) umfasst, wobei eine Position und Orientierung eines weiteren Fahrzeugmoduls (25) durch mindestens eine Modulpositioniereinrichtung veränderbar ist,
**dadurch gekennzeichnet, dass**
eine Orientierung des Grundmoduls (2) oder der Modulgesamtheit durch die Hauptpositioniereinrichtung veränderbar ist, wobei die erste und die mindestens eine weitere Positioniereinrichtung als Gelenkarmroboter (21, 22, 23) ausgebildet sind.

2. Vorrichtung nach Anspruch 1, **dadurch gekennzeichnet, dass** eine maximale Dimension eines Arbeitsraums (26) der Vorrichtung (20) zur Montage oder Demontage kleiner als oder gleich 25m ist.

3. Vorrichtung nach einem der Ansprüche 1 bis 2, **dadurch gekennzeichnet, dass** die Vorrichtung (20) eine Transporteinrichtung umfasst, wobei mittels der Transporteinrichtung ein Fahrzeugmodul (25) oder mehrere, vereinzelte Fahrzeugmodule (25) in einen Arbeitsraum (26) und/oder aus einem Arbeitsraum (26) der Vorrichtung (20) transportierbar sind.

4. Vorrichtung nach einem der Ansprüche 1 bis 3, **dadurch gekennzeichnet, dass** die Vorrichtung (20) mindestens ein Mittel zur Identifikation und/oder mindestens ein Mittel zur Bestimmung einer Position und Orientierung eines Fahrzeugmoduls (25) und/oder des Grundmoduls (2) oder der der Modulgesamtheit umfasst.

5. Verfahren zur Montage eines Fahrzeugs (1) aus Fahrzeugmodulen (25) oder zu Demontage eines Fahrzeugs (1) in Fahrzeugmodule (25), wobei das Verfahren mittels einer Vorrichtung gemäß einem der Ansprüche 1 bis 4 durchgeführt wird, wobei das Verfahren mindestens einen Montageschritt zur Montage eines weiteren Fahrzeugmoduls (25) an einem Grundmodul (2) oder an einer Modulgesamtheit oder zur Demontage eines weiteren Fahrzeugmoduls (25) von dem Grundmodul (2) oder von der Modulgesamtheit umfasst, wobei die Modulgesamtheit das Grundmodul (2) umfasst, wobei in dem mindestens einen Montageschritt das Grundmodul (2) oder die Modulgesamtheit durch eine Hauptpositioniereinrichtung in eine Montageposition und Montageorientierung positioniert wird, wobei eine Position und Orientierung des Grundmoduls (2) oder der Modulgesamtheit verändert wird, wobei während und/oder nach der Positionierung des Grundmoduls (2) oder der Modulgesamtheit in die Montageposition und Montageorientierung das weitere Fahrzeugmodul (25) an das Grundmodul (2) oder die Modulgesamtheit montiert oder von dem Grundmodul (2) oder der Modulgesamtheit demontiert wird.

6. Verfahren nach Anspruch 5, **dadurch gekennzeichnet, dass** das Grundmodul (2) oder die Modulgesamtheit während des mindestens einen Montageschritts zumindest zeitweise auf einer Haltevorrichtung abgesetzt und/oder durch zumindest eine der Positioniereinrichtungen gehalten wird.

7. Verfahren nach einem der Ansprüche 5 bis 6, **dadurch gekennzeichnet, dass** das Grundmodul (2) ein Bodenmodul und/oder das weitere Fahrzeugmodul (25) ein weiteres Bodenmodul (10, 11), ein Frontmodul (6), ein Heckmodul (7), ein Türmodul (3, 4), ein Sitzmodul, ein Dachmodul, ein Lenkmodul, ein Pedalmodul, ein Armaturenmodul, ein Radmodul, ein Antriebsmodul, ein Energiespeichermodul oder ein Verbindungsmodul ist.

8. Verfahren nach einem der Ansprüche 5 bis 7, **dadurch gekennzeichnet, dass** das Fahrzeug (1) zumindest teilweise von innen nach außen montiert wird oder zumindest teilweise von außen nach innen demontiert wird.

9. Verfahren nach einem der Ansprüche 5 bis 8, **dadurch gekennzeichnet, dass** ein weiteres Fahrzeugmodul (25) mechanisch demontierbar an dem Grundmodul (2) oder der Modulgesamtheit befestigt wird.

10. Verfahren nach einem der Ansprüche 5 bis 9, **dadurch gekennzeichnet, dass** der mindestens eine Montageschritt noch mindestens einen der folgenden Teilschritte umfasst:
- Identifikation eines Fahrzeugmoduls (25),
- Bestimmung einer Position und/oder Orientierung eines Fahrzeugmoduls (25),
- Greifen eines Fahrzeugmoduls (25),
- Bestimmung einer Position und/oder Orientierung des Grundmoduls (2) oder der Modulgesamtheit,
- Greifen des Grundmoduls (2) oder der Modulgesamtheit,
- Wechseln eines Greifmoduls der ersten und/oder der mindestens einen weiteren Positioniereinrichtung.

11. Verfahren nach einem der Ansprüche 5 bis 10, **dadurch gekennzeichnet, dass** die Montage oder die Demontage in einem Arbeitsraum (26) erfolgt, wobei eine maximale Dimension des Arbeitsraums (26) kleiner als oder gleich 25m ist.

12. Verfahren nach einem der Ansprüche 5 bis 11, **dadurch gekennzeichnet, dass** zeitlich vor dem mindestens einen Montageschritt ein oder mehrere Fahrzeugmodule (25) in den Arbeitsraum transportiert wird/werden oder nach dem mindestens einen Montageschritt aus dem Arbeitsraum (26) abtransportiert werden.

## Claims

1. A device for assembling or disassembling a vehicle (1) composed of vehicle modules (25), the device (20) comprising a first positioning unit and at least one further positioning unit, a position of a base module (2) or of a totality of modules being variable by a main positioning unit, the totality of modules comprising the base module (2), and a position and an orientation of a further vehicle module (25) being variable by at least one module positioning unit,
**characterized in that**
an orientation of the base module (2) or of the totality of modules can be varied by the main positioning unit, the first positioning unit and the at least one further positioning unit being designed as articulated robots (21, 22, 23).

2. The device according to claim 1, **characterized in that** a maximum dimension of a work space (26) of the device (20) for assembly or disassembly is smaller than or equal to 25 m.

3. The device according to claim 1 or 2, **characterized in that** the device (20) comprises a transport unit, one vehicle module (25) or multiple, separate vehicle modules (25) being transportable into a work space (26) and/or out of a work space (26) of the device (20) by way of the transport unit.

4. The device according to any one of claims 1 to 3, **characterized in that** the device (20) comprises at least one means for identifying and/or at least one means for determining a position and an orientation of a vehicle module (25) and/or of the base module (2) or of the totality of modules.

5. A method for assembling a vehicle (1) from vehicle modules (25) or for disassembling a vehicle (1) into vehicle modules (25), the method being carried out by way of a device according to any one of claims 1 to 4, and the method comprising at least one assembly step for installing a further vehicle module (25) on a base module (2) or on a totality of modules, or for removing a further vehicle module (25) from the base module (2) or from the totality of modules, the totality of modules comprising the base module (2), in the at least one assembly step the base module (2) or the totality of modules being positioned by a main positioning unit in an assembly position and an assembly orientation, a position and an orientation of the base module (2) or of the totality of modules being varied, and, during and/or after the positioning of the base module (2) or of the totality of modules in the assembly position and the assembly orientation, the further vehicle module (25) being installed on the base module (2) or the totality of modules or removed from the base module (2) or the totality of modules.

6. The method according to claim 5, **characterized in that**, during the at least one assembly step, the base module (2) or the totality of modules is at least intermittently set down on a holding device and/or held by at least one of the positioning units.

7. The method according to claim 5 or 6, **characterized in that** the base module (2) is a floor module and/or the further vehicle module (25) is a further floor module (10, 11), a front module (6), a rear module (7), a door module (3, 4), a seat module, a roof module, a steering module, a pedal module, an instruments module, a wheel module, a drive module, an energy store module or a connecting module.

8. The method according to any one of claims 5 to 7, **characterized in that** the vehicle (1) is at least partially assembled from the inside to the outside or at least partially disassembled from the outside to the inside.

9. The method according to any one of claims 5 to 8, **characterized in that** a further vehicle module (25) is attached to the base module (2) or the totality of modules in a mechanically removable manner.

10. The method according to any one of claims 5 to 9, **characterized in that** the at least one assembly step also comprises at least one of the following sub-steps:
- identifying a vehicle module (25);
- determining a position and/or an orientation of a vehicle module (25);
- gripping a vehicle module (25);
- determining a position and/or an orientation of the base module (2) or of the totality of modules;
- gripping the base module (2) or the totality of modules;
- replacing a gripping module of the first and/or the at least one further positioning unit.

11. The method according to any one of claims 5 to 10, **characterized in that** the assembly or the disassembly takes place in a work space (26), a maximum dimension of the work space (26) being smaller than or equal to 25 m.

12. The method according to any one of claims 5 to 11, **characterized in that**, chronologically prior to the at least one assembly step, one or more vehicle modules (25) are transported into the work space, or are transported out of the work space (26) after the at least one assembly step.

## Revendications

1. Dispositif de montage ou de démontage d'un véhicule (1) constitué de modules de véhicule (25), où le dispositif (20) comprend un premier système de positionnement et au moins un autre système de positionnement, où une position d'un module de base (2) où d'un ensemble modulaire peut être modifiée par un système de positionnement principal, où l'ensemble modulaire comprend le module de base (2), où une position et une orientation d'un autre module de véhicule (25) peuvent être modifiées par au moins un système de positionnement de module,
**caractérisé en ce**
**qu'**une orientation du module de base (2) ou de l'ensemble modulaire peut être modifiée par le système de positionnement principal, où le premier et l'au moins un autre systèmes de positionnement sont conçus sous forme de robots de bras d'articulation (21, 22, 23).

2. Dispositif selon la revendication 1, **caractérisé en ce qu'**une dimension maximale d'un espace de travail (26) du dispositif (20) pour le montage ou le démontage est inférieur ou égal à 25 m.

3. Dispositif selon l'une des revendications 1 à 2, **caractérisé en ce que** le dispositif (20) comprend un système de transport, où, au moyen du système de transport, un module de véhicule (25) ou plusieurs modules de véhicule (25) individuels peuvent être transportés dans un espace de travail (26) et/ou hors d'un espace de travail (26) du dispositif (20).

4. Dispositif selon l'une des revendications 1 à 3, **caractérisé en ce que** le dispositif (20) comprend au moins un moyen d'identification et/ou au moins un moyen de détermination d'une position et d'une orientation d'un module de véhicule (25) et/ou du module de base (2) ou de celles de l'ensemble modulaire.

5. Procédé de montage d'un véhicule (1) constitué de modules de véhicule (25) ou de démontage d'un véhicule (1) en modules de véhicules (25), où le procédé est réalisé au moyen d'un dispositif selon l'une des revendications 1 à 4, où le procédé comprend au moins une étape de montage pour le montage d'un autre module de véhicule (25) sur un module de base (2) ou sur un ensemble modulaire ou pour le démontage d'un autre module de véhicule (25) du module de base (2) ou de l'ensemble modulaire, où l'ensemble modulaire comprend le module de base (2), où, dans l'au moins une étape de montage, le module de base (2) ou l'ensemble modulaire sont positionnés par un système de positionnement principal dans une position de montage et une orientation de montage, où une position et une orientation du module de base (2), ou de l'ensemble modulaire, sont modifiées, où, pendant et/ou après le positionnement du module de base (2) ou de l'ensemble modulaire, l'autre module de véhicule (25) est monté sur le module de base (2) ou sur l'ensemble modulaire ou est démonté du module de base (2) ou de l'ensemble modulaire.

6. Procédé selon la revendication 5, **caractérisé en ce que** le module de base (2) ou l'ensemble modulaire est déposé pendant l'au moins une étape de montage au moins momentanément sur un dispositif support et/ou est maintenu par au moins un des systèmes de positionnement.

7. Procédé selon l'une des revendications 5 à 6, **caractérisé en ce que** le module de base (2) est un module de plancher et/ou l'autre module de véhicule (25) est un autre module de plancher (10, 11), un module frontal (6), un module arrière (7), un module de porte (3, 4), un module de siège, un module de pavillon, un module de direction, un module de pédale, un module d'armature, un module de roue, un module d'entraînement, un module d'accumulation d'énergie ou un module de liaison.

8. Procédé selon l'une des revendications 5 à 7, **caractérisé en ce que** le véhicule (1) est monté au moins partiellement de l'intérieur vers l'extérieur et démonté au moins partiellement de l'extérieur vers l'intérieur.

9. Procédé selon l'une des revendications 5 à 8, **caractérisé en ce qu'**un autre module de véhicule (25) est fixé en étant démontable mécaniquement sur le module de base (2) ou sur l'ensemble modulaire.

10. Procédé selon l'une des revendications 5 à 9, **caractérisé en ce que** l'au moins une étape de montage comprend encore au moins l'une des étapes suivantes :
- identification d'un module de véhicule (25),
- détermination d'une position et/ou d'une orientation d'un module de véhicule (25),
- prise en main d'un module de véhicule (25),
- détermination d'une position et/ou d'une orientation du module de base (2) ou de l'ensemble modulaire,
- prise en main du module de base (2) ou de l'ensemble modulaire,
- échange d'un module de prise en main du premier et/ou de l'au moins un autre système de positionnement.

11. Procédé selon l'une des revendications 5 à 10, **caractérisé en ce que** le montage ou le démontage est effectué dans un espace de travail (26), où une dimension maximale de l'espace de travail (26) est inférieure ou égale à 25 m.

12. Procédé selon l'une des revendications 5 à 11, **caractérisé en ce que** momentanément avant l'au moins une étape de montage, un ou plusieurs modules de véhicule (25) est/sont transporté/s dans l'espace de travail ou est/sont transporté/s hors de l'espace de travail (26) après l'au moins une étape de montage.
